# EUROPÄISCHE PATENTSCHRIFT

(11) **EP 3 993 675 B1**
(45) Veröffentlichungstag und Bekanntmachung des Hinweises auf die Patenterteilung: **28.06.2023**
(21) Anmeldenummer: 20731013.7
(22) Anmeldetag: 29.05.2020
(51) Int. Cl.: A47J 36/24

(54) **PORTABLE HEIZQUELLE**
PORTABLE HEAT SOURCE
SOURCE DE CHALEUR PORTATIVE

(30) Priorität: 04.07.2019 DE 102019118098; 21.10.2019 DE 102019128375
(43) Veröffentlichungstag der Anmeldung: 11.05.2022
(73) Patentinhaber: Deutsches Zentrum für Luft- und Raumfahrt e.V., 51147 Köln (DE)
(72) Erfinder: KRAFT, Werner, 70565 Stuttgart (DE); LANZ, Tim, 70195 Stuttgart (DE); VETTER, Peter, 70178 Stuttgart (DE); STAHL, Veronika, 71229 Leonberg (DE)
(74) Vertreter: RPK Patentanwälte Reinhardt und Kaufmann Partnerschaft mbB
(86) Internationale Anmeldenummer: PCT/EP2020/065087
(87) Internationale Veröffentlichungsnummer: WO 2021/001098

(56) Entgegenhaltungen:
- EP-A2- 2 997 865
- DE-A1-102015 012 017
- DE-B3-102013 114 507
- US-A1- 2016 242 598
- US-A1- 2017 042 373
- US-A1- 2018 084 943

## Beschreibung

### Stand der Technik

Die Erfindung betrifft eine portable Heizquelle insbesondere in Form einer Kochplatte und/oder einer Warmhalteplatte und/oder eines Ofens.

Es ist bekannt, portable Heizquellen beispielsweise bei kühleren Temperaturen im Außenbereich in Form von gasbetriebenen Heizpilzen sowie in Form von Grills und Gaskochern beim Campen einzusetzen. Hierzu müssen Gaskartuschen oder Grillkohle gelagert werden. Ein Einsatz im Innenbereich ist wegen der Abgase beim Verbrennen von Gas oder Kohle nicht vorgesehen.

Die DE102015012017A1 offenbart eine Vorrichtung zum Temperieren von Babyflaschen mit einem PCM-Material mit latenter Wärme mit einer Schmelztemperatur bei 37°C.

Die DE102013114507B3 offenbart eine Vorrichtung, bei der eine Trinktemperatur von 60° für Heißgetränke oder eine Temperatur von 30°C für Babynahrung bereitgestellt wird. Eingesetzt wird eine Mischung, die Stearinsäure als PCM-Material mit einer Schmelztemperatur von 69°C enthält.

Die US20180084943A1, die US20170042373A1 und die US20160242598A1 offenbaren eine Vorrichtung wie ein Trinkgefäß, bei dem ein PCM-Material dazu dient, ein zu heißes Getränk oder Speisen abzukühlen. Um ein kühles oder kaltes Getränk aufzuwärmen, sind regelbare Heizelemente vorgesehen. Als PCM-Material zum Kühlen wird Paraffin eingesetzt.

Die EP2997865A2 beschreibt einen Dampf-Gareinsatz für eine Küchenmaschine, bei dem Wasser als PCM-Material eingesetzt wird.

### Offenbarung der Erfindung

Die Aufgabe der Erfindung ist, eine portable Heizquelle anzugeben, die bei Verwendung frei vom Verbrennungsabgasen ist und im Innenbereich wie im Außenbereich eingesetzt werden kann.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und der Zeichnung.

Es wird eine portable Heizquelle in Form einer Kochplatte und/oder einer Warmhalteplatte und/oder eines Ofens vorgeschlagen mit einem Heizkern, enthaltend wenigstens ein Phasenwechselmaterial in einer Einhausung, wobei der Heizkern wenigstens bereichsweise von einer Wärmedämmung umgeben ist Das Phasenwechselmaterial umfasst ein metallisches oder halbmetallisches Phasenwechselmaterial mit einer Phasenwechseltemperatur von wenigstens 500°C.

Der Heizkern stellt eine thermische Speichervorrichtung da, mit der eine Hochtemperatur-Wärmespeicherung realisiert werden kann. Insbesondere erfolgt die Wärmespeicherung mit dem metallischen Phasenwechselmaterial, auch als mPCM bekannt, über latente Wärme und sensible Wärme. Beim Phasenübergang kann das metallische Phasenwechselmaterial ohne Temperaturänderung in fester Phase thermische Energie aufnehmen, bis das metallische Phasenwechselmaterial vollständig geschmolzen ist oder in flüssiger Phase thermische Energie abgeben, bis das metallische Phasenwechselmaterial vollständig erstarrt ist.

Über das metallische Phasenwechselmaterial lässt sich Wärme und insbesondere latente und sensible Wärme für einen längeren Zeitraum speichern. Insbesondere kann Wärme auf einem hohen Temperaturniveau gespeichert werden, welches beispielsweise bei mindestens 500°C und insbesondere bei ca. 600°C bis 650°C liegt. Es lässt sich, abhängig von der Art des metallischen Phasenwechselmaterials (mPCM), Wärme auf einem Temperaturniveau von bis zu 1500°C speichern. Beispielsweise kann reines Silizium mit einer Phasenwechseltemperatur von 1414°C oder SiBs mit einer Phasenwechseltemperatur von 1385°C eingesetzt werden.

Das metallische Phasenwechselmaterial liegt je nach thermischem Beladungszustand im flüssigen Zustand oder festen Zustand vor. Ein günstiges Phasenwechselmaterial ist beispielsweise AlSi₁₂.

Wird beispielsweise AlSi₁₂ als metallisches Phasenwechselmaterial im Temperaturintervall von 25°C bis 600°C genutzt, so besitzt dieses eine Energiedichte von ca. 300 Wh/kg bzw. ca. 795 Wh/l.

Zum Vergleich hierzu kann beispielsweise aufgrund der Nutzung relativ kleiner Temperaturintervalle bei Wärmflaschen nur relative geringe Energiedichten erreicht werden. Die Energiedichte einer mit Wasser gefüllten Wärmflasche, die von 25°C auf 95°C erwärmt wird, liegt beispielsweise um 80 Wh/kg bzw. 80 Wh/l.

Als Vorteil gegenüber Systemen, die z.B. Gas als Brennstoff nutzen, wie dies etwa bei einem Heizpilz oder Camping-Kocher der Fall ist, kann auf fossile Energieträger verzichtet werden. In jedem Fall ist zumindest eine lokale Emissionsfreiheit gegeben, so dass eine Nutzung im Innenbereich wie auch im Außenbereich möglich ist.

Im Falle der Regeneration des metallischen Phasenwechselmaterials, bei der das Phasenwechselmaterial aufgeschmolzen wird, kann eine Beladung mit elektrischer Energie aus erneuerbaren Energiequellen oder aber eine Beladung mittels konzentrierter Solarstrahlung erfolgen, so dass auch eine globale Emissionsfreiheit vorteilhaft erreicht werden kann.

Besonders vorteilhaft ist die mobile Bereitstellung von thermischer Energie durch die transportable Heizquelle. Die mobile Bereitstellung kann dabei realisiert werden, indem an einem bestimmten Ort der Heizkern der Heizquelle beladen wird und die Heizquelle diese Wärme an einem anderen Ort, an dem keine Infrastruktur zu Beladung bereitsteht, wieder abgegeben wird.

Auch ist ein deutlicher zeitlicher Versatz der Beladung und der Abgabe der thermischen Energie möglich. Die Entladung des metallischen Phasenmaterials erfolgt passiv, d.h. aufgrund eines Temperaturgefälles sich einstellender Konvektion, Wärmeleitung oder Wärmestrahlung.

Die mobile Heizquelle kann zum Zubereiten oder Erwärmen von Speisen oder aber zur unmittelbaren Erwärmung von Personen oder Räumen in Gebäuden oder auch Zelten oder Wohnwagen eingesetzt werden.

Günstigerweise kann eine Heizquelle mit einer hohen Energiedichte bereitgestellt werden.

Nach einer günstigen Ausgestaltung kann das Phasenwechselmaterial der portablen Heizquelle eine metallische Legierung oder halbmetallische Legierung umfassen mit einem oder mehreren der Bestandteile Aluminium, Silizium, Kupfer, Magnesium, Bor, Zink, insbesondere eine AISi-Legierung, bevorzugt AlSi₁₂. Günstige Legierungen sind eutektische Legierungen und intermetallische Verbindungen, beispielsweise verschiedene Silizide, bei denen der Phasenwechsel unter Aufnahme oder Abgabe latenter Wärme stattfindet.

Weiterhin günstig sind insbesondere binäre Legierungen oder ternäre Legierungen und Legierungssysteme mit mehr als drei Komponenten, mit einer eutektischen Zusammensetzung oder einer intermetallischen Zusammensetzung mit wenigstens einer der oben genannten Komponenten Al, Si, Cu, Mg, B, Zn.

Einige vorteilhafte Beispiele unter einer Vielzahl von bekannten derartigen Systemen sind AlSi₁₂ mit Ts=577°C; AlCu₂₇Si₅ mit Ts=522°C; AlMg₂₈Zn₁₃ mit Ts=461°C; Al₆₁Mg₃₉ mit Ts=466°C; MgZn₅₂ mit Ts=346°C; ZnAl₄Mg₂ mit T_{S}=351°C; CuCa₃₀Al₁₄ mit Ts=294°C, wobei Ts die jeweilige Phasenwechseltemperatur ist.

Es können geeignete Materialien für verschiedene Temperaturbereiche gewählt werden.

Nach einer günstigen Ausgestaltung kann in der Einhausung, insbesondere innerhalb eines Bereichs mit Phasenwechselmaterial, eine Wärmeleiteinrichtung angeordnet sein. Die Wärmeleiteinrichtung kann vorteilhaft die Zufuhr von Wärme in das metallische Phasenwechselmaterial oder die Abgabe von Wärme aus dem metallischen Phasenwechselmaterial ermöglichen und für stabile thermische Verhältnisse sorgen, beispielsweise im Heizkern beim Beladen mit Sonnenstrahlung und im Bereich der Wärmeübertragungsfläche, z.B. einer Kochplatte, beim Entladen aus dem Heizkern. Die Wärmeleiteinrichtung kann beispielsweise Wärmeleitrippen aufweisen, die in das Phasenwechselmaterial hineinragen.

Nach einer günstigen Ausgestaltung kann das Phasenwechselmaterial einen größeren thermischen Ausdehnungskoeffizienten aufweisen als ein Material der Einhausung.

Alternativ oder zusätzlich kann das Phasenwechselmaterial wenigstens bereichsweise mit der Wärmeleiteinrichtung in thermischem Kontakt sein. Insbesondere kann dabei das Phasenwechselmaterial einen größeren thermischen Ausdehnungskoeffizienten als ein Material der Wärmeleiteinrichtung mindestens in dem Kontaktbereich mit der Wärmeleiteinrichtung aufweisen. Es kann ein inniger thermischer Kontakt zwischen dem Phasenwechselmaterial und/oder der Einhausung bzw. der Wärmeleiteinrichtung sichergestellt werden.

Nach einer günstigen Ausgestaltung kann die Einhausung und/oder die Wärmeleiteinrichtung aus faserverstärktem Keramikmaterial gebildet sein. Insbesondere kann die Einhausung und/oder die Wärmeleiteinrichtung aus einem faserverstärkten nicht-oxidischen Keramikmaterial gebildet sein. Das faserverstärkte nicht-oxidische Keramikmaterial kann insbesondere aus kohlefaserverstärktem Kohlenstoff und/oder kohlefaserverstärktem Siliziumkarbid und/oder siliziumkarbidfaserverstärktem Kohlenstoff und/oder siliziumkarbidfaserverstärktem Siliziumkarbid (SiC) gebildet sein.

Andere mögliche Einhausungsmaterialien sind Keramik, beispielsweise Aluminiumoxid, Zirkonoxid, Bornitrid, Siliziumoxid, Aluminiumnitrid, Siliziumkarbid, Borcarbid, Graphit und dergleichen.

Damit lässt sich auf einfache Weise ein verringerter thermischer Ausdehnungskoeffizient im Vergleich zu dem metallischen Phasenwechselmaterial erreichen. Die Einhausung kann vorteilhaft in Leichtbauweise realisiert werden. Über eine Faserverstärkung lassen sich besonders dünne Wände der Einhausung ausbilden. Eine entsprechende Einhausung lässt sich dadurch auf vorteilhafte Weise für die Aufnahme von Materialien verwenden, wenn wiederholt eine Erhitzung eines entsprechenden aufgenommenen Materials unter hohen Heizraten und eine Abkühlung unter hohen Kühlraten erfolgen soll.

Günstig sind Einhausungsmaterialien mit hoher Thermoschockbeständigkeit hoher Oxidationsbeständigkeit, hoher mechanischer Stabilität und insbesondere hoher Korrosionsbeständigkeit. Es lässt sich eine langzeitstabile Einhausung von Phasenwechselmaterialien erreichen, welche mindestens zeitweise Metallschmelzen sind.

Durch die Einhausung mit entsprechendem Wandungsmaterial können Metallschmelzen langzeitstabil eingehaust werden.

Es ergibt sich eine hohe Korrosionsresistenz. Dadurch kann die Einhausung im Zusammenhang mit Metallschmelzen eingesetzt werden, deren Temperatur im Bereich beispielsweise bis ca. 600°C oder 650°C oder sogar bis 1500°C liegen kann.

Das metallische Phasenwechselmaterial kann in einer Einhausungskammer eingehaust werden oder in mehreren Einhausungssegmenten eingehaust werden oder makroverkapselt eingehaust werden oder mikroverkapselt eingehaust werden.

Grundsätzlich kann die durch die Einhausung aufgenommene Metallschmelze ständig im flüssigen Zustand vorliegen, oder sie kann nur zeitweise im flüssigen Zustand vorliegen. Beispielsweise nimmt die Einhausung ein metallisches Phasenwechselmaterial auf, welches beispielsweise bei thermischer Beladung im flüssigen Zustand vorliegt und nach thermischer Entladung im festen Zustand vorliegt. Es lässt sich dann beispielsweise sowohl latente als auch sensible Wärme speichern.

Günstig ist es, wenn eine Wandstärke eines Wandungsbereichs aus dem Wandungsmaterial aus faserverstärktem SiC-Material mindestens 1 mm, insbesondere mindestens 2 mm und mindestens insbesondere 2,5 mm beträgt und beispielsweise bei ca. 3 mm liegt. Vorzugsweise liegt die Wandstärke bei höchstens 5 mm. Es lässt sich so eine mechanisch stabile Wandung bereitstellen, wobei eine hohe Thermoschockbeständigkeit erreicht ist. Ferner lässt sich die Wandstärke relativ gering halten, so dass sich die Behältervorrichtung mit kleinem Gewicht ausbilden lässt.

Nach einer günstigen Ausgestaltung kann dem Phasenwechselmaterial Energie durch elektrische Energie und/oder Solarstrahlung zuführbar sein. Auf diese Weise kann eine Beladung des Phasenwechselmaterial erfolgen.

Nach einer günstigen Ausgestaltung kann die Wärmeleiteinrichtung an eine Heizeinrichtung gekoppelt oder koppelbar sein oder eine Heizeinrichtung aufweisen Insbesondere kann die Heizeinrichtung eine elektrische Heizeinrichtung sein. Optional kann eine Widerstandsheizung oder eine induktive Beheizung vorgesehen sein. Ferner kann alternativ oder zusätzlich eine Beladung mittels konzentrierter Solarstrahlung erfolgen.

Nach einer günstigen Ausgestaltung kann die Wärmedämmung beispielsweise pyrogenes Siliziumdioxid aufweisen. Andere Materialien, wie etwa Mineralwolle, Calciumsilikat, Keramikfaser (z.B. Calcium-Magnesium-Silikate), Glimmer, oder auch Vakuumdämmung, können ebenso vorteilhaft eingesetzt werden. Auch andere Materialien, die zwar eine höhere Wärmeleitfähigkeit aufweisen, dafür aber preiswerter sind, können optional eingesetzt werden.

Nach einer günstigen Ausgestaltung kann bei einer Ausgestaltung der portablen Heizquelle als Kochplatte die Wärmedämmung eine Öffnung aufweisen, durch welche eine Wärmeübertragungsfläche des Heizkerns zugänglich ist. Vorteilhaft kann die Öffnung durch eine thermisch isolierende Abdeckung verschließbar sein, beispielsweise einen Deckel mit Griff oder dergleichen. Der Deckel kann zum Erwärmen eines Gefäßes oder auch zum Einstrahlen von Sonnenlicht zum Erwärmen des metallischen Speichermaterials abgenommen werden. Vorteilhaft kann der Deckel dasselbe Material aufweisen wie die Wärmedämmung um den Heizkern.

Die Wärmeübertragungsfläche kann selbst als Abstellfläche und Kontaktfläche für einen Gefäß dienen, oder es kann eine mittelbare Kopplung zwischen Gefäß und Wärmeübertragungsfläche vorgesehen sein, beispielsweise über plattenförmige Adapter, die auf die Wärmeübertragungsfläche des Heizkerns gelegt werden.

Nach einer günstigen Ausgestaltung kann eine Verstelleinrichtung vorgesehen sein, mit der ein variabler Abstand zwischen der Wärmeübertragungsfläche und einer Heizfläche einstellbar ist. Das zu erwärmende Gefäß kann auf der Abstellfläche der Verstelleinrichtung, die als Heizfläche dient, abgestellt sein. Je nach Abstand der Abstellfläche kann das Gefäß mehr oder weniger erhitzt werden.

Auf diese Weise können unterschiedliche Kochstufen bei der Herdplatte realisiert werden. Ferner kann die Verstelleinrichtung auch in Form eines Grillrostes vorgesehen sein, bei dem das Gargut mehr oder weniger nahe an die Wärmeübertragungsfläche herangebracht sein kann.

Nach einer günstigen Ausgestaltung kann die Öffnung im bestimmungsgemäßen Gebrauchszustand austauschbare Adapter aufnehmen. Insbesondere können unterschiedliche Adapter unterschiedliche Höhen und/oder unterschiedliche Abstände zum Heizkern und/oder unterschiedliche Wärmeleitfähigkeiten und/oder unterschiedliche Durchmesser aufweisen. Damit lassen sich reproduzierbar unterschiedliche Kochstufen einstellen bzw. die geeigneten Adapter für unterschiedlich große Gefäße gewählt werden, ohne dass Abwärme der Heizquelle ungenutzt verloren geht.

Nach einer günstigen Ausgestaltung kann bei einer Ausgestaltung der portablen Heizquelle als Warmhalteplatte der Heizkern in einem Hohlraum der Wärmedämmung angeordnet sein, wobei die Wärmedämmung teilbar ausgebildet sein kann. Vorteilhaft kann der Heizkern zum Aufheizen des metallischen Phasenwechselmaterials durch Öffnen der Wärmedämmung partiell freigelegt werden. Der Heizkern der Warmhalteplatte kann relativ klein sein und besonders gut isoliert sein, um an ihrer Außenseite eine lang anhaltende, moderat erhöhte Temperatur aufzuweisen. Vorteilhaft kann die Temperatur an der Außenseite begrenzt sein, so dass eine Verletzungsgefahr an der Außenseite vermieden werden kann.

Nach einer günstigen Ausgestaltung kann die Kochplatte oder Warmhalteplatte eine oder mehrere Griffanordnungen aufweisen. Die portable Heizquelle kann einfach von einem Ort zum anderen getragen werden, beispielsweise zwischen einem Ort, an dem das metallische Phasenwechselmaterial erhitzt wird und einem Ort, an dem die Heizquelle zum Kochen oder Warmhalten genutzt wird.

Nach einer günstigen Ausgestaltung kann der Heizkern als im Wesentlichen flache Scheibe ausgebildet sein, deren Durchmesser größer ist als deren Höhe. Dies erlaubt eine kompakte und handliche Form der Heizquelle. Es kann bei einer Beladung mittels konzentrierter Solarstrahlung durch einen Parabolspiegel vorteilhaft sein, diesen so wenig wie möglich zu verschatten. Dann kann eine zylindrische Form mit einer Höhe gleich oder größer des Durchmessers vorteilhaft sein.

Nach einer günstigen Ausgestaltung kann bei einer Ausgestaltung der portablen Heizquelle als Ofen die Einhausung in einem mobilen Transportwagen angeordnet sein. Somit kann auch eine größere Einheit leicht von einem Ort zum anderen transportiert werden. Der Ofen kann flexibel zum Erwärmen eines Gebäudes, beispielsweise eine Gartenhütte oder Wanderhütte oder eines Zeltes oder Caravans, eingesetzt werden.

Nach einer günstigen Ausgestaltung kann die Wärmedämmung einen Hohlraum aufweisen, in dem der Heizkern angeordnet ist und die erste Wärmedämmung von einer zweiten Wärmedämmung umgeben ist. Die Temperatur an der Außenseite des Ofens kann auf einen für Menschen sicheren Bereich begrenzt werden. Optional kann auch nur eine Wärmedämmung vorgesehen sein.

Nach einer günstigen Ausgestaltung kann eine Vertiefung als Warmhaltebereich in der ersten und/oder zweiten Wärmedämmung angeordnet sein. Dies ermöglicht beispielsweise das Erwärmen von Wasser, oder anderen Getränken, das langsame Garen von Speisen oder das Warmhalten von Speisen.

Nach einer günstigen Ausgestaltung kann der Heizkern als Zylinder ausgebildet sein, dessen Durchmesser kleiner als dessen Höhe ist. Vorteilhaft kann eine Platz sparende Heizquelle geschaffen werden.

Vorteilhaft wird eine mobile Heizquelle bereitgestellt, die elektrisch oder auch mittels konzentrierter Solarstrahlung beladen werden kann. Durch die elektrische Beladung ergibt sich ein lokal emissionsfreies System. Mit dem Ausbau der Erneuerbaren Energien und der weiteren Steigerung des Anteils an Erneuerbaren Energien im Energiemix kann auch ein zunehmen global emissionsfreies System zur mobilen Bereitstellung thermische Energie bereitgestellt werden. In der Ausführung mit Beladung durch konzentrierte Solarstrahlung ergibt sich ein System, welches bereits zum aktuellen Zeitpunkt vollständig mit erneuerbaren Energien betrieben werden kann. Gleichzeitig stellt die transportable Heizquelle deutlich höhere Energiedichten als bisher verfügbare mobile Wärmequellen bereit, die nicht auf fossile Energieträger zurückgreifen.

Die portable Heizquelle kann in günstigen Abmessungen und mit günstigem Gewicht hergestellt werden.

Portable Heizquellen mit Speichereinheit inklusive Anbauteile, welche von Personen getragen werden sollen, sollten ein Gewicht von 15 kg bis 55 kg, besser jedoch 10 kg bis 30 kg nicht überschreiten. Portable Heizquellen, welche mithilfe von Wägen oder Karren transportiert werden sollen, sollten eine Gesamtmasse von 55 kg bis 500 kg, entsprechend der maximalen Traglast von Schwerlast-Sackkarren, nicht überschreiten. Speichereinheiten können je nach Anwendung aber auch bereits mit einer Gesamtmasse weniger als 15 kg realisiert werden. Das hierfür notwendige Volumen resultiert im Wesentlichen aus der für die jeweilige Anwendung erforderlichen Speicherkapazität, der Phasenwechseltemperatur und der jeweils zulässigen Selbstentladerate. In der einfachsten Form beginnt die Entladung unmittelbar nach der Beladung, sodass der Dämmungsaufwand reduziert werden kann. Die Dämmung kann beispielsweise zur Minimierung der Speicherverluste oder zur Begrenzung der Oberflächentemperatur, insbesondere aus Handhabungsgründen, ausgelegt werden.

Für eine günstige Auslegung der Heizquelle als Kochplatte wird angenommen, dass über 2 Stunden mit einer mittleren Leistung von 1 kW gekocht werden soll, wofür insgesamt 2 kWh an Speicherkapazität notwendig sind. Dies erfordert in etwa 7 kg Speichermaterial. Mit Einhausung, Dämmung und ggfs. anderen Komponenten kann die Heizplatte dann auf eine Gesamtmasse von schätzungsweise 10 bis 12 kg kommen. 7 kg Speichermaterial beanspruchen ein Volumen von ca. 2,7 I. Dies entspricht einer zylindrischen Scheibe mit einem Durchmesser von 22 cm bei einer mittleren Kochplatte und einer Höhe von etwa 7 cm. Mit einer Dämmstärke von ca. 3 cm und der Annahme einer Einhausungsdicke von 1 cm in allen Richtungen ergibt sich dann eine zylindrische Scheibe mit 30 cm Durchmesser und 15 cm Höhe. Dies entspricht einem Gesamtvolumen von 10,6 I. Die Dämmung hätte ein Volumen von ca. 6 I und würde damit etwa 57% des Gesamtvolumens ausmachen.

Für eine erste Anwendung als Ofen in der Art eines Wärmekoffers werden bei einer günstigen Auslegung bei einer Heizleistung von 0,5 kW über eine Dauer von ca. 8 Stunden etwa 4 kWh Speicherkapazität benötigt. Hierfür sind etwa 14 kg Speichermaterial notwendig, die ein Volumen von ca. 5,4 I besitzen.

Mit Einhausung, elektrischem Heizer und Dämmung, ohne Transportgestell wiegt die Heizplatte dann ungefähr 22 bis 25 kg. Ein zylindrischer Behälter kann bei einer Einhausungsdicke von 1 cm und einer Dämmstärke von 4 cm daher z.B. einen Durchmesser von 26 cm und eine Höhe von 37 cm haben. Der Behälter weist damit dann ein Gesamtvolumen von ca. 20 I auf. Die Dämmung hätte ein Volumen von ca. 12 l und würde damit etwa 60% des Volumens ausmachen.

Für eine zweite Anwendung als Ofen in der Art eines Heizpilzes werden mit einer angenommenen Leistung von ca. 10 kW über eine Dauer von 8 Stunden ergibt eine Kapazität von 80 kWh. Hierfür sind etwa 280 kg Speichermaterial notwendig, welches ein Volumen von ca. 108 I besitzen. Unter der Annahme einer Einhausung von 1 cm und einer Dämmstärke von 4 cm ergibt sich ein Zylinder mit z.B. 50 cm Durchmesser und einer Höhe von 96 cm. Der Behälter weist damit ein Gesamtvolumen von etwa 189 l auf. Die Dämmung hätte ein Volumen von ca. 60 I und damit einen Anteil von ca. 32% des Volumens.

Grundsätzlich können Dämmungen auch dünner ausgelegt werden, da sowohl bei der Verwendung als Wärmeplatte als auch als Ofen die abgestrahlte Wärme der Heizplatte genutzt wird. Die Anteile der Dämmung am Gesamtvolumen, und auch das Gesamtvolumen der Speicher kann entsprechend reduziert werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in einer Schnittdarstellung eine Kochplatte nach einem Ausführungsbeispiel der Erfindung mit abgedeckter Wärmeübertragungsfläche;
- Fig. 2: in einer Schnittdarstellung eine Kochplatte nach einem Ausführungsbeispiel der Erfindung mit einer Wärmeleiteinrichtung im Heizkern;
- Fig. 3: in einer Schnittdarstellung eine Kochplatte nach einem Ausführungsbeispiel der Erfindung mit einem Tragegestell mit Griffen;
- Fig. 4: in einer Schnittdarstellung eine Kochplatte nach einem Ausführungsbeispiel der Erfindung mit einer Verstelleinrichtung zur Änderung eines Abstand zu einer Wärmeübertragungsfläche eines Heizkerns;
- Fig. 5: in einer Schnittdarstellung eine Kochplatte nach einem Ausführungsbeispiel der Erfindung mit einem Adapter zum Erwärmen eines Gefäßes;
- Fig. 6: die Kochplatte nach Figur 5 mit einem höheren Adapter zum Erwärmen eines Gefäßes;
- Fig. 7: in einer Schnittdarstellung eine Kochplatte nach einem Ausführungsbeispiel der Erfindung beim thermischen Aufladen eines Heizkerns;
- Fig. 8: in einer Schnittdarstellung eine Warmhalteplatte nach einem Ausführungsbeispiel der Erfindung;
- Fig. 9: in einer Schnittdarstellung ein Ofen nach einem Ausführungsbeispiel der Erfindung;
- Fig. 10: in einer Schnittdarstellung ein Ofen nach einem Ausführungsbeispiel der Erfindung mit einem Warmhaltebereich;
- Fig. 11: schematisch den Ofen nach Figur 10 in einem Gebäude oder Zelt.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

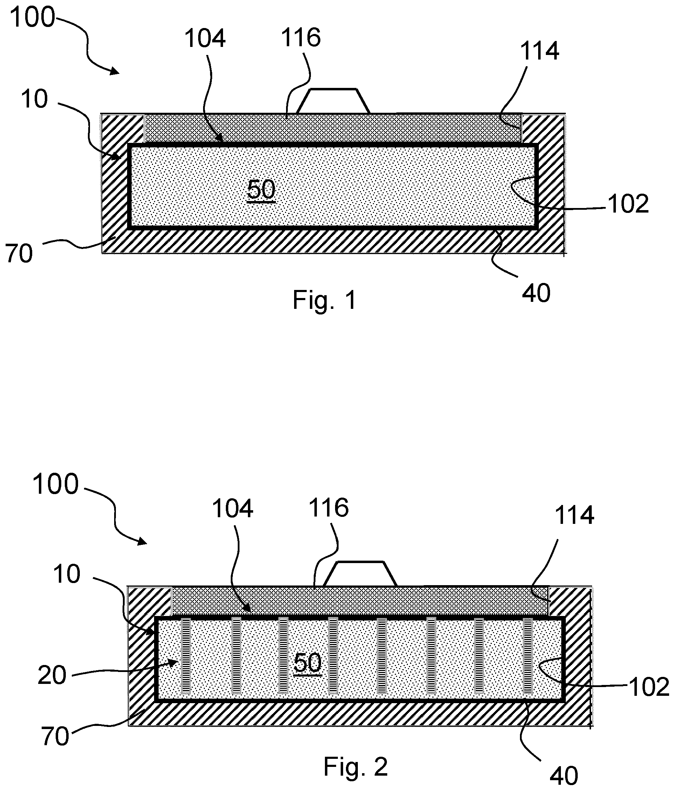

Die Figuren 1 bis 7 zeigen Ausführungsbeispiele einer erfindungsgemäßen transportablen Heizquelle in Form von Kochplatten 100. Die Kochplatten 100 werden zum Zubereiten von Speisen eingesetzt.

Figur 1 zeigt in einer Schnittdarstellung eine Kochplatte 100 nach einem Ausführungsbeispiel der Erfindung mit abgedeckter Wärmeübertragungsfläche 104. Die Kochplatte 100 weist einen scheibenförmigen Heizkern 10 auf. Der Heizkern 10 besteht in diesem Beispiel aus einer Einhausung 40, in der ein metallisches Phasenwechselmaterial 50 enthalten ist. Der Querschnitt der Heizplatte 10 kann rund oder eckig sein.

Das Phasenwechselmaterial 50 weist eine Phasenwechseltemperatur von wenigstens 500°C. Das Phasenwechselmaterial 50 kann beispielsweise eine Silizid-Legierung sein, insbesondere AlSi₁₂. Dieses Material hat eine Phasenwechseltemperatur von etwa 577 °C, bei der das Material bei konstanter Temperatur schmilzt, wenn Energie zugeführt wird, bzw. erstarrt, wenn Energie entzogen wird.

Die Einhausung 40 kann in einem Ausführungsbeispiel aus einem insbesondere faserverstärkten Keramikmaterial gebildet sein, beispielsweise Siliziumkarbid, oder auch Aluminiumoxid oder Graphit. Denkbar sind jedoch auch andere geeignete Materialien. Die Wandstärke kann sehr dünn sein, beispielsweise 1 mm, insbesondere mindestens 2 mm und mindestens insbesondere 2,5 mm beträgt und beispielsweise bei ca. 3 mm liegt. Vorzugsweise liegt die Wandstärke bei höchstens 5 mm.

Vorzugsweise ist der thermische Ausdehnungskoeffizient des metallischen Phasenwechselmaterials 50 größer als der des Materials der Einhausung 40.

Der Heizkern 10 ist in einer Aufnahme 102 einer Wärmedämmung 70 angeordnet und beispielsweise an drei Seiten von dieser umgeben. Die Wärmedämmung 70 weist eine Öffnung 114 auf, durch welche im bestimmungsgemäßen Betriebszustand eine Wärmeübertragungsfläche 104 des Heizkerns 10 zugänglich ist. Die Öffnung 114 kann durch eine Abdeckung 116, etwa einem Deckel mit Griff, abgedeckt sein. Die Abdeckung 116 wird entfernt, um die Kochplatte 100 benutzen zu können.

Die Wärmedämmung 70 kann beispielsweise pyrogenes Siliziumdioxid sein. Optional können auch konventionelle Dämmmaterialien sinnvoll eingesetzt werden, wie z.B. Dämmstoffe auf Basis von Keramikfasern, wie etwa Mineralwolle, Calcium-Magnesium-Silikatfaser, Calciumsilikat, mikroporöser Dämmstoff, ruhende Luft, Vakuumdämmplatten und dergleichen

Der Heizkern 10 gibt die Wärme des Phasenwechselmaterials 50 im Wesentlichen über die Wärmeübertragungsfläche 104 ab.

Die Wärmeübertragungsfläche 104 dient als Abstellfläche für ein Gefäß zum Erwärmen des Gefäßes. Optional kann ein Adapter auf die Wärmeübertragungsfläche 104 des Heizkerns 10 gelegt werden und dessen Oberseite als Abstellfläche und Heizfläche dienen, auf der das Gefäß auf dem Adapter abgestellt werden kann. Damit kann der Wärmeübergang zwischen Heizkern 10 und Gefäß gesteuert werden.

Figur 2 zeigt in einer Schnittdarstellung eine Kochplatte 100 nach einem weiteren Ausführungsbeispiel der Erfindung. Der Aufbau der Kochplatte 100 entspricht demjenigen aus Figur 1, auf die zur Vermeidung unnötiger Wiederholungen verweisen wird. In der Ausgestaltung der Figur 2 ist im Phasenwechselmaterial 50 zusätzlich eine Wärmeleiteinrichtung 20 angeordnet. Die Wärmeleiteinrichtung 20 kann eine Mehrzahl von nicht näher bezeichneten Lamellen aufweisen, die zur Einleitung von Wärme in den Heizkern 10 bzw. Ableitung von Wärme aus dem Heizkern 10 mit dem im Phasenwechselmaterial 50 dienen und zur homogenen Temperaturverteilung beitragen kann. Die Lamellen erstrecken sich beispielsweise parallel zur Hochachse der Kochplatte 100. Ist die Kochplatte 100 mit einem runden Querschnitt ausgebildet, können die Lamellen konzentrische Ringe bilden. Andere Geometrien sind ebenfalls möglich.

Die Wärmeleiteinrichtung 20 kann aus dem gleichen Material gebildet sein wie die Einhausung 40.

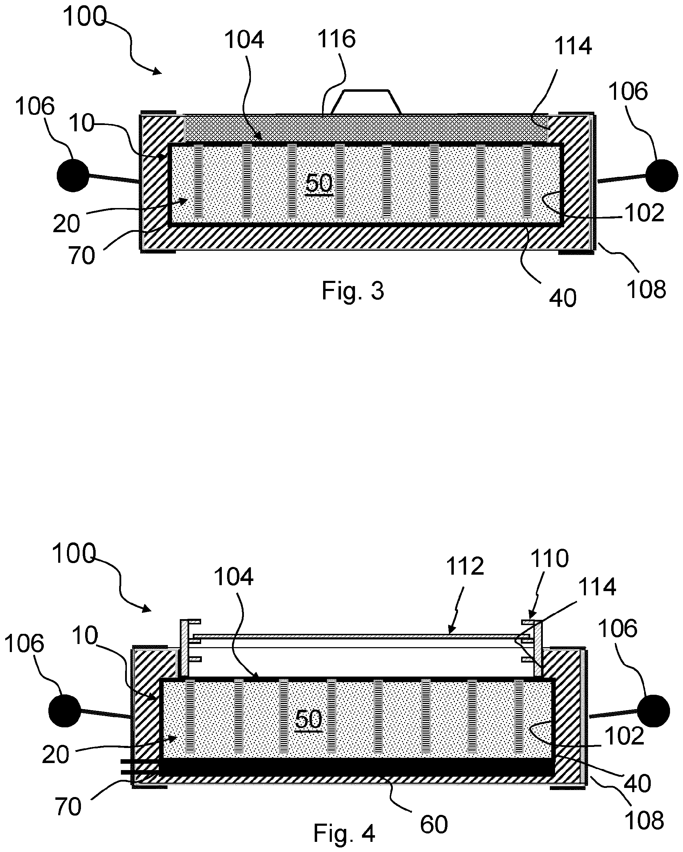

Figur 3 zeigt in einer Schnittdarstellung eine Kochplatte 100 nach einem weiteren Ausführungsbeispiel der Erfindung. Der Aufbau der Kochplatte 100 entspricht demjenigen aus Figur 2, auf die zur Vermeidung unnötiger Wiederholungen verweisen wird.

Die Kochplatte 100 weist zusätzlich ein Tragegestell 108 mit Griffen 106 auf, in welchem die Wärmedämmung 70 mit dem Heizkern 10 gehaltert ist. Damit kann die Kochplatte 100 bequem und sicher getragen werden.

Figur 4 zeigt in einer Schnittdarstellung eine Kochplatte 100 nach einem weiteren Ausführungsbeispiel der Erfindung. Der Aufbau der Kochplatte 100 entspricht demjenigen aus Figur 3, auf die zur Vermeidung unnötiger Wiederholungen verweisen wird.

Die Kochplatte 100 weist in dieser Ausgestaltung eine Verstelleinrichtung 110 zur Änderung eines Abstands einer Abstellfläche 112 zu einer Wärmeübertragungsfläche 104 des Heizkerns 10 auf. Die Verstelleinrichtung 110 ist in die Öffnung 114 der Wärmedämmung 70 eingesetzt.

Die Abstellfläche 112 kann auf verschiedenen Höhen der Verstelleinrichtung 110 abgelegt werden. Mit der Verstellung des Abstands kann die Wärmeübertragung vom Heizkern 10 auf das Gefäß beeinflusst werden.

Alternativ kann die Verstelleinrichtung 110 als Grillaufsatz verwendet werden, bei dem Grillgut auf unterschiedlichen Abständen zum Heizkern 10 gegart werden kann.

Zusätzlich weist die Kochplatte 100 in dieser Ausgestaltung unter dem Heizkern 10 eine elektrische Heizeinrichtung 60 auf. Diese kann eine Widerstandsheizung sein oder eine Induktionsheizung und über eine Ladestation geladen werden.

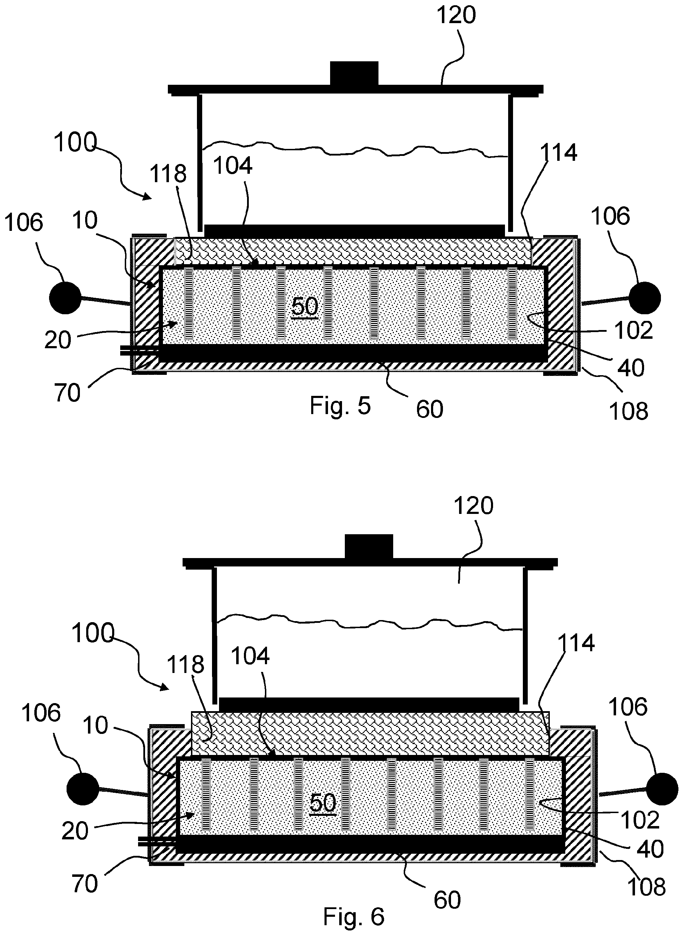

Figur 5 zeigt in einer Schnittdarstellung eine Kochplatte 100 nach einem weiteren Ausführungsbeispiel der Erfindung. Der Aufbau der Kochplatte 100 entspricht demjenigen aus Figur 3 ohne Verstelleinrichtung 110; auf Figur 3 wird zur Vermeidung unnötiger Wiederholungen verwiesen.

In der Öffnung 114 der Wärmedämmung 70 ist ein Adapter 118 auf der Wärmeübertragungsfläche 104 abgelegt, auf den ein Gefäß 120 abgestellt ist.

Optional kann die Wärmeübertragungsfläche 104 mit senkrechten Stiften in entsprechenden hohlzylinderartigen Ausnehmungen im Phasenwechselmaterial 50 höhenverstellbar angeordnet sein.

Die Stifte können Teil der Einhausung 40 sein und damit insgesamt eine abgedichtete Einhausungskammer bilden. Die Stifte der Wärmeübertragungsfläche 104 können beispielsweise entweder durch gute Passgenauigkeit oder aber durch zusätzliche Wärmeleitpaste mit den Hohlzylindern kontaktiert werden.

Figur 6 zeigt die Kochplatte 100 nach Figur 5 mit einem höheren Adapter 118 auf der Wärmeübertragungsfläche 104 zum Erwärmen des Gefäßes 120. Mittels unterschiedlicher Adapter 118 kann der Wärmeübergang vom Heizkern 10 auf das Gefäß 120 gezielt beeinflusst werden. Auf diese Weise können beispielsweise unterschiedliche Garstufen eingestellt werden, selbst wenn der Heizkern 10 eine konstante Temperatur aufweist.

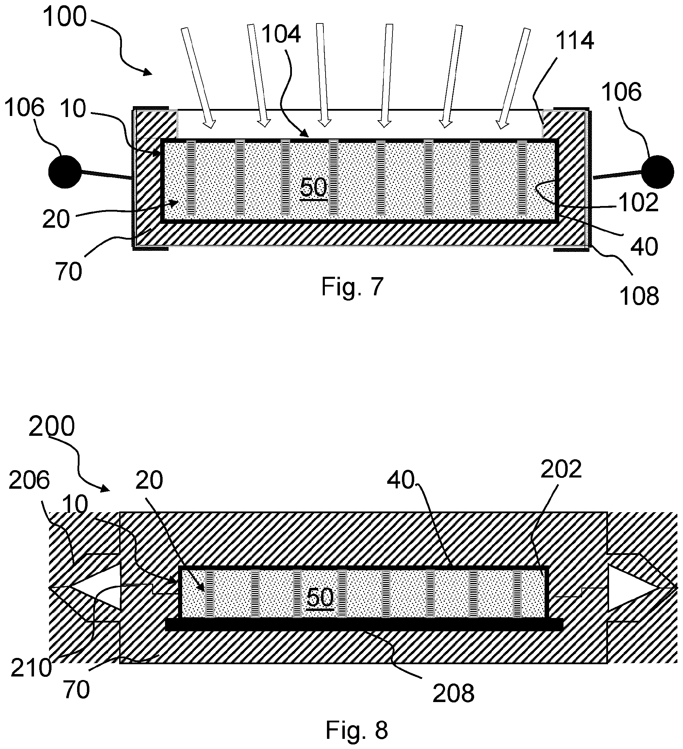

Figur 7 zeigt in einer Schnittdarstellung eine Kochplatte 100 nach einem weiteren Ausführungsbeispiel der Erfindung. Der Aufbau der Kochplatte 100 entspricht demjenigen aus Figur 3, auf die zur Vermeidung unnötiger Wiederholungen verweisen wird.

In dieser Ausführung erfolgt das thermische Aufladen des Heizkerns 10 nicht über eine elektrische Heizeinrichtung 60, sondern über Strahlungswärme, insbesondere über gebündelte Sonnenstrahlung. Diese wirkt auf die Wärmeübertragungsfläche 104 ein und erhitzt das Phasenwechselmaterial 50 im Heizkern 10.

Es versteht sich, dass diese Art der Aufladung auch mit einer elektrischen Heizeinrichtung 60 wie in den Figuren 4 bis 6 kombiniert werden kann.

Figur 8 in einer Schnittdarstellung eine Warmhalteplatte 200 nach einem Ausführungsbeispiel der Erfindung.

Bei dieser Ausgestaltung der portablen Heizquelle ist der Heizkern 10 mit dem in einer Einhausung 40 angeordneten Phasenweichselmaterial 50 in einem Hohlraum 202 der Wärmedämmung 70 angeordnet. Die Wärmedämmung 70 ist entlang einer Trennlinie 210 teilbar ausgebildet, so dass ein Teil der Wärmedämmung 70 abgehoben werden kann.

Um den Heizkern 10 zu erwärmen, kann eine elektrische Heizeinrichtung 60, z.B. eine Widerstandheizung oder Induktionsheizung, vorgesehen sein. Beispielsweise an einer wenigstens Seite der Einhausung 40 eine Induktorplatte 208 angeordnet sein, welche durch elektromagnetische Strahlung erhitzt wird.

Die Warmhalteplatte 200 ist von einem Griffrand 206 umgeben, an dem die Warmhalteplatte 200 bequem und sicher gefasst werden kann. Die Warmhalteplatte 200 wird zum Warmhalten von Speisen eingesetzt oder zum Temperieren von Personen oder Gegenständen. Die Warmhalteplatte 200 kann für verschiedene Einsatzgebiete in Form geeignet angepasst werden.

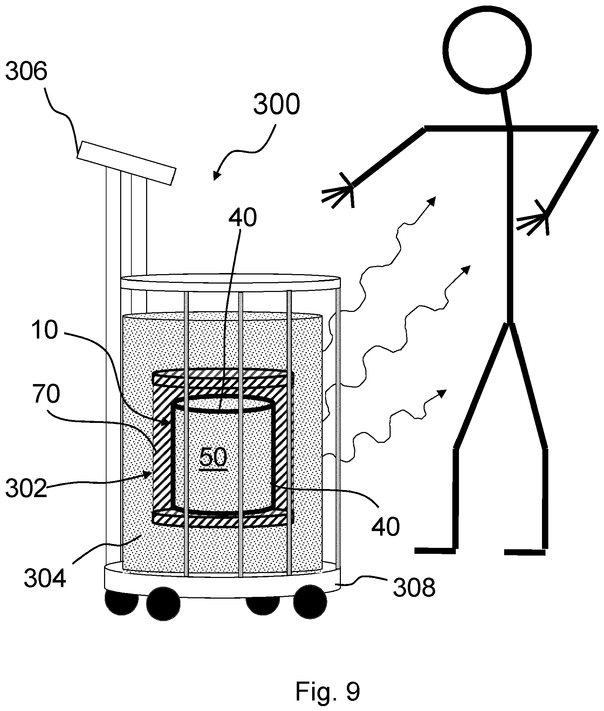

Die Figuren 9 bis 11 zeigen Ausführungsbeispiele einer erfindungsgemäßen transportablen Heizquelle in Form von Öfen 300. Die Öfen 300 werden zum Erwärmen von Personen oder von Räumen eingesetzt.

Figur 9 zeigt in einer Schnittdarstellung einen Ofen 300 nach einem Ausführungsbeispiel der Erfindung. Der Heizkern 10 mit der mit dem Phasenwechselmaterial 50 gefüllten Einhausung 40 ist in einem mobilen Transportwagen 308 angeordnet. Günstigerweise ist dieser Transportwagen 308 ähnlich eines Trolleys oder Einkaufswagens gebildet und kann so einfach beispielsweise mittels eines Griffs 306 bewegt werden.

Der Heizkern 10 ist in einem zentralen Hohlraum 302 einer ersten Wärmedämmung 70 angeordnet, die von einer weiteren Wärmedämmung 304 umgeben.

Die Wärmedämmung 70, 304 kann dabei so aufgebaut sein, dass beispielsweise über Öffnungen Wärmestrahlung Heizkern 10 an die Umgebung emittiert werden kann.

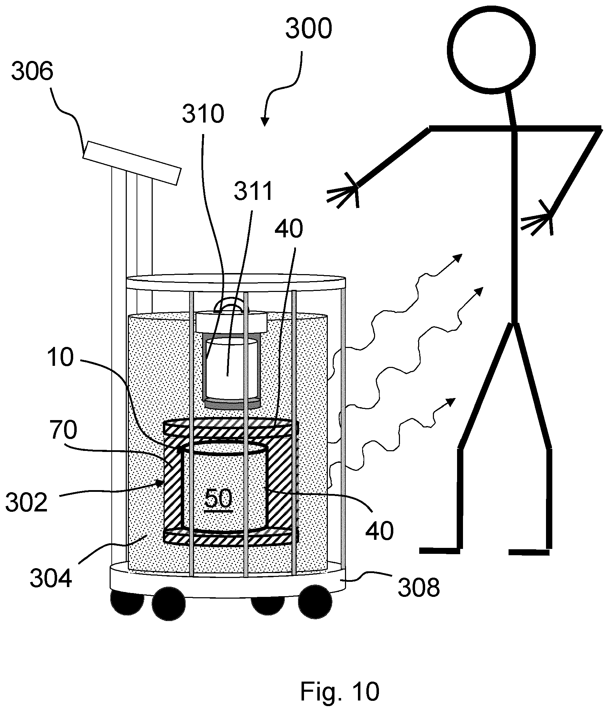

Optional kann der Ofen 300 weiterhin eine Vertiefung 310 aufweisen, in der beispielsweise ein Warmwasserbehälter 311 aufnehmbar sein kann, der durch die Wärme des Heizkerns 10 gespeist wird. Dies ist in Figur 10 dargestellt.

Nicht dargestellt ist in den Figuren 9 und 10 ein etwaiger elektrischer Stromanschluss, der zur elektrischen Beladung des Heizkerns 10 benötigt wird. Dieser kann günstigerweise so ausgeführt sein, dass konventionelle Steckdosen genutzt werden können.

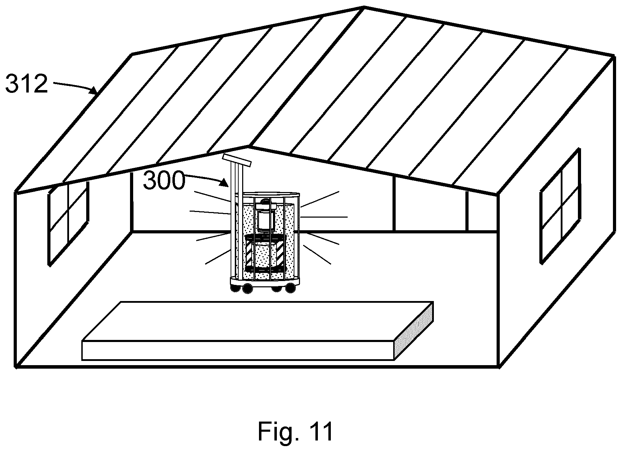

Figur 11 illustriert schematisch den Ofen 300 nach Figur 10 in einem Gebäude oder Zelt 312.

Die Wärmeabgabe vom Ofen 300 an die Umgebung dabei über die Wärmedämmung 70, 304 oder auch über Luftkanäle in der Wärmedämmung 70, 304 erfolgen. Genutzt wird hierbei die natürliche Konvektion bzw. bei entsprechender Ausführung auch ein sog. Kamineffekt. Das dargestellte Gebäude (Hütte, Zelt etc.) kann entweder eine vom Ofen 300 separierte Komponente sein oder aber direkt mit dem Ofen 300 integriert sein.
- 10: Heizkern
- 20: Wärmeleiteinrichtung
- 40: Einhausung
- 50: Phasenwechselmaterial
- 60: Heizeinrichtung
- 70: Wärmedämmung
- 100: Kochplatte
- 102: Aufnahme
- 104: Wärmeübertragungsfläche
- 106: Griff
- 108: Tragegestell
- 110: Verstelleinrichtung
- 112: Abstellfläche
- 114: Öffnung
- 116: Abdeckung
- 118: Adapter
- 120: Gefäß
- 200: Warmhalteplatte
- 202: Hohlraum
- 206: Griffrand
- 208: Induktorplatte
- 300: Ofen
- 302: Hohlraum
- 304: Wärmedämmung
- 306: Griff
- 308: Transportwagen
- 310: Vertiefung
- 311: Warmwasserbehälter
- 312: Gebäude

## Patentansprüche

1. Portable Heizquelle, insbesondere in Form einer Kochplatte (100) und/oder einer Warmhalteplatte (200) und/oder eines Ofens (300), mit einem Heizkern (10) enthaltend wenigstens ein Phasenwechselmaterial (50) in einer Einhausung (40), wobei der Heizkern (10) wenigstens bereichsweise von einer Wärmedämmung (70) umgeben ist, und wobei das Phasenwechselmaterial (50) ein metallisches Phasenwechselmaterial (50) umfasst, **dadurch gekennzeichnet, dass** das Phasenwechselmaterial (50) eine Phasenwechseltemperatur von wenigstens 500°C aufweist.

2. Portable Heizquelle nach Anspruch 1, wobei das Phasenwechselmaterial (50) eine metallische Legierung oder halbmetallische Legierung umfasst mit einem oder mehreren der Bestandteile Aluminium, Silizium, Kupfer, Magnesium, Bor, Zink, insbesondere eine AISi-Legierung, bevorzugt AlSi₁₂.

3. Portable Heizquelle nach einem der vorhergehenden Ansprüche, wobei in der Einhausung (40), insbesondere innerhalb eines Bereichs mit Phasenwechselmaterials (50), eine Wärmeleiteinrichtung (20) angeordnet ist.

4. Portable Heizquelle nach einem der vorhergehenden Ansprüche, wobei das Phasenwechselmaterial (50) einen größeren thermischen Ausdehnungskoeffizienten aufweist als ein Material der Einhausung (40) und/oder
wobei das Phasenwechselmaterial (50) wenigstens bereichsweise mit der Wärmeleiteinrichtung (20) in thermischem Kontakt ist, insbesondere wobei das Phasenwechselmaterial (50) einen größeren thermischen Ausdehnungskoeffizienten als ein Material der Wärmeleiteinrichtung (20) mindestens in dem Kontaktbereich mit der Wärmeleiteinrichtung (20) aufweist.

5. Portable Heizquelle nach einem der vorhergehenden Ansprüche, **dadurch gekennzeichnet, dass** die Einhausung (40) und/oder die Wärmeleiteinrichtung (20) aus faserverstärktem Keramikmaterial gebildet ist, insbesondere aus einem faserverstärkten nicht-oxidischen Keramikmaterial gebildet ist, insbesondere aus kohlefaserverstärktem Kohlenstoff und/oder kohlefaserverstärktem Siliziumkarbid und/oder siliziumkarbidfaserverstärktem Kohlenstoff und/oder siliziumkarbidfaserverstärktem Siliziumkarbid und/oder Keramik, insbesondere Aluminiumoxid, Zirkonoxid, Bornitrid, Siliziumoxid, Aluminiumnitrid, Siliziumkarbid, Borcarbid, und/oder Graphit.

6. Portable Heizquelle nach einem der vorhergehenden Ansprüche, **dadurch gekennzeichnet, dass** dem Phasenwechselmaterial (50) Energie durch elektrische Energie und/oder Solarstrahlung zuführbar ist.

7. Portable Heizquelle nach einem der vorhergehenden Ansprüche, **dadurch gekennzeichnet, dass** die Wärmeleiteinrichtung (20) an eine Heizeinrichtung (60) gekoppelt oder koppelbar ist oder eine Heizeinrichtung (60) aufweist, insbesondere wobei die Heizeinrichtung (60) eine elektrische Heizeinrichtung ist.

8. Portable Heizquelle nach einem der vorhergehenden Ansprüche, wobei die Wärmedämmung (70) pyrogenes Siliziumdioxid und/oder Mineralwolle und/oder Calciumsilikat und/oder Keramikfaser und/oder Glimmer und/oder eine Vakuumdämmung aufweist.

9. Portable Heizquelle nach einem der vorhergehenden Ansprüche, wobei bei einer Ausgestaltung als Kochplatte (100) die Wärmedämmung (70) eine, insbesondere durch eine thermisch isolierende Abdeckung (116) verschließbare, Öffnung (114) aufweist, durch welche eine Wärmeübertragungsfläche (104) des Heizkerns (10) zugänglich ist.

10. Portable Heizquelle nach Anspruch 9, wobei eine Verstelleinrichtung (110) vorgesehen ist, mit der ein variabler Abstand zwischen der Wärmeübertragungsfläche (104) und einer Abstellfläche (112) einstellbar ist.

11. Portable Heizquelle nach Anspruch 9 oder 10, wobei die Öffnung (114) im bestimmungsgemäßen Gebrauchszustand austauschbare Adapter (118) aufnimmt, insbesondere wobei unterschiedliche Adapter (118) unterschiedliche Höhen und/oder unterschiedliche Abstände zum Heizkern (10) und/oder unterschiedliche Wärmeleitfähigkeiten und/oder unterschiedliche Durchmesser aufweisen.

12. Portable Heizquelle nach einem der vorhergehenden Ansprüche, wobei bei einer Ausgestaltung als Warmhalteplatte (200) der Heizkern (10) in einem Hohlraum (202) der Wärmedämmung (70) angeordnet ist, wobei die Wärmedämmung (70) teilbar ausgebildet ist.

13. Portable Heizquelle nach einem der Ansprüche 9 bis 12, wobei die Kochplatte (100) oder Warmhalteplatte (200) eine oder mehrere Griffanordnungen (106, 206) aufweist.

14. Portable Heizquelle nach einem der Ansprüche 9 bis 13, wobei der Heizkern (10) als im wesentlichen flache Scheibe ausgebildet ist, deren Durchmesser größer ist als deren Höhe.

15. Portable Heizquelle nach einem der Ansprüche 1 bis 8, wobei bei einer Ausgestaltung als Ofen (300) die Einhausung (40) in einem mobilen Transportwagen (308) angeordnet ist.

16. Portable Heizquelle nach Anspruch 15, wobei die Wärmedämmung (70) einen Hohlraum (302) aufweist, in dem der Heizkern (10) angeordnet ist und die erste Wärmedämmung (70) von einer zweiten Wärmedämmung (304) umgeben ist.

17. Portable Heizquelle nach Anspruch 15 oder 16, wobei eine Vertiefung (310) als Warmhaltebereich in der ersten und/oder zweiten Wärmedämmung (70, 304) angeordnet ist, insbesondere wobei die Vertiefung (310) zur Aufnahme eines Warmwasserbehälters (311) vorgesehen ist.

18. Portable Heizquelle nach einem der Ansprüche 15 bis 17, wobei der Heizkern (10) als Zylinder ausgebildet ist, dessen Durchmesser kleiner als dessen Höhe ist.

## Claims

1. Portable heat source, particularly in the form of a cooking plate (100) and/or a warming plate (200) and/or an oven (300), having a heating core (10) containing at least one phase change material (50) in a housing (40), wherein the heating core (10) is surrounded at least partially by a thermal insulation (70), and wherein the phase change material (50) comprises a metallic phase change material (50),
**characterised in that** the phase change material (50) has a phase change temperature of at least 500°C.

2. Portable heat source according to claim 1, wherein the phase change material (50) comprises a metallic alloy or semi-metallic alloy having one or several of the components aluminium, silicon, copper, magnesium, boron, zinc, particularly an AlSi alloy, preferably AlSi₁₂.

3. Portable heat source according to any of the preceding claims, wherein in the housing (40), in particular within a region with phase change material (50), is arranged a thermal conduction device (20).

4. Portable heat source according to any of the preceding claims, wherein the phase change material (50) has a larger thermal expansion coefficients than a material of the housing (40)
and/or
wherein the phase change material (50) is in thermal contact at least in some parts with the thermal conduction device (20), in particular wherein the phase change material (50) has a larger thermal expansion coefficient than a material of the thermal conduction device (20) at least in the contact region with the thermal conduction device (20).

5. Portable heat source according to any of the preceding claims, **characterised in that** the housing (40) and/or the thermal conduction device (20) is formed of fibre reinforced ceramic material, particularly of a fibre reinforced non-oxidic ceramic material, particularly of carbon fibre reinforced carbon and/or carbon fibre reinforced silicon carbide and/or silicon carbide reinforced carbon and/or silicon carbide fibre reinforced silicon carbide and/or ceramic, in particular aluminium oxide, zirconium oxide, boron nitride, silicon oxide, aluminium nitride, silicon carbide, boron carbide and/or graphite.

6. Portable heat source according to any of the preceding claims, **characterised in that** the phase change material (50) can be supplied with energy by means of electrical energy and/or solar radiation.

7. Portable heat source according to any of the preceding claims, **characterised in that** the thermal conduction device (20) is coupled or can be coupled to a heating device (60) or has a heating device (60), in particular wherein the heating device (60) is an electrical heating device.

8. Portable heat source according to any of the preceding claims wherein the thermal insulation (70) has pyrogenic silicon dioxide and/or mineral wool and/or calcium silicate and/or ceramic fibres and/or mica and/or a vacuum insulation.

9. Portable heat source according to any of the preceding claims, wherein in the case of a design as a cooking plate (100) the thermal insulation (70) has an opening (114) which can in particular be closed by a thermally insulating cover (116), through which opening a heat transfer surface (104) of the heating core (10) is accessible.

10. Portable heat source according to claim 9, wherein an adjusting device (110) is provided with which a variable distance between the transfer surface (104) and a storage surface (112) can be adjusted.

11. Portable heat source according to claim 9 or 10, wherein the opening (114) accommodates exchangeable adapters (118) in proper use state, in particular wherein different adapters (118) have different heights and/or different distances from the heating core (10) and/or different thermal conductivities and/or different diameters.

12. Portable heat source according to any of the preceding claims, wherein in a configuration as a warming plate (200) the heating core (10) is arranged in a hollow space (202) of the thermal insulation (70), wherein the thermal insulation (70) is designed so as to be divisible.

13. Portable heat source according to any of claims 9 to 12, wherein the cooking plate (100) or warming plate (200) has one or several handle arrangements (106, 206).

14. Portable heat source according to any of claims 9 to 13, wherein the heating core (10) is designed as a substantially flat plate, the diameter of which is greater than its height.

15. Portable heat source according to any of claims 1 to 8, wherein in a configuration as an oven (300) the housing (40) is arranged in a mobile transport trolley (308).

16. Portable heat source according to claim 15, wherein the thermal insulation (70) has a hollow space (302) in which the heating core (10) is arranged and the first thermal insulation (70) is surrounded by a second thermal insulation (304).

17. Portable heat source according to claim 15 or 16, wherein an indentation (310) is arranged in the first and/or second thermal insulation (70, 304) as a warming area, in particular wherein the indentation (310) is intended for the reception of a warm water container (311).

18. Portable heat source according to any of claims 15 to 17, wherein the heating core (10) is designed as a cylinder, the diameter of which is smaller than its height.

## Revendications

1. Source de chaleur portative, en particulier sous la forme d'une plaque de cuisson (100) et/ou d'un chauffe-plat (200) et/ou d'un four (300), avec un noyau chauffant (10) contenant au moins un matériau à changement de phase (50) dans un boîtier (40), dans laquelle le noyau chauffant (10) est entouré au moins par zones d'une isolation thermique (70), et dans laquelle le matériau à changement de phase (50) comprend un matériau à changement de phase (50) métallique,
**caractérisée en ce que** le matériau à changement de phase (50) présente une température de changement de phase d'au moins 500 °C.

2. Source de chaleur portative selon la revendication 1, dans laquelle le matériau à changement de phase (50) comprend un alliage métallique ou un alliage semi-métallique avec un ou plusieurs des éléments constitutifs aluminium, silicium, cuivre, magnésium, bore, zinc, en particulier un alliage AISi, de préférence AlSi₁₂.

3. Source de chaleur portative selon l'une quelconque des revendications précédentes, dans laquelle dans le boîtier (40), en particulier à l'intérieur d'une zone avec le matériau à changement de phase (50), est disposé un dispositif de conduction thermique (20).

4. Source de chaleur portative selon l'une quelconque des revendications précédentes, dans laquelle le matériau à changement de phase (50) présente un coefficient de dilatation thermique supérieur à celui d'un matériau du boîtier (40) et/ou
dans laquelle le matériau à changement de phase (50) est en contact thermique au moins par zones avec le dispositif de conduction thermique (20), en particulier dans laquelle le matériau à changement de phase (50) présente un coefficient de dilatation thermique supérieur à celui d'un matériau du dispositif de conduction thermique (20) au moins dans la zone de contact avec le dispositif de conduction thermique (20).

5. Source de chaleur portative selon l'une quelconque des revendications précédentes, **caractérisée en ce qu'**un boîtier (40) et/ou le dispositif de conduction thermique (20) est conçu à partir d'un matériau céramique renforcé par des fibres, en particulier est conçu à partir d'un matériau céramique non oxydé renforcé par des fibres, en particulier à partir de carbone renforcé par fibres de carbone et/ou de carbure de silicium renforcé par des fibres de carbone et/ou de carbone renforcé par des fibres de carbure de silicium et/ou de carbure de silicium renforcé par des fibres de carbure de silicium et/ou de céramique, en particulier d'oxyde d'aluminium, d'oxyde de zirconium, de nitrure de bore, d'oxyde de silicium, de nitrure d'aluminium, de carbure de silicium, de carbure de bore et/ou de graphite.

6. Source de chaleur portative selon l'une quelconque des revendications précédentes, **caractérisée en ce que** de l'énergie peut être fournie au matériau à changement de phase (50) par de l'énergie électrique et/ou un rayonnement solaire.

7. Source de chaleur portative selon l'une quelconque des revendications précédentes, **caractérisée en ce que** le dispositif de conduction thermique (20) est couplé ou peut être couplé à un dispositif de chauffage (60) ou présente un dispositif de chauffage (60), en particulier dans laquelle le dispositif de chauffage (60) est un dispositif de chauffage électrique.

8. Source de chaleur portative selon l'une quelconque des revendications précédentes, dans laquelle l'isolation thermique (70) présente de l'oxyde de silicium pyrogène et/ou de la laine minérale et/ou du silicate de calcium et/ou des fibres céramiques et/ou du mica et/ou une isolation sous vide.

9. Source de chaleur portative selon l'une quelconque des revendications précédentes, dans laquelle pour un mode de réalisation comme plaque de cuisson (100) l'isolation thermique (70) présente une ouverture (114), en particulier pouvant être fermée par un couvercle d'isolation thermique (116), à travers lequel une surface de transfert de chaleur (104) du noyau chauffant (10) est accessible.

10. Source de chaleur portative selon la revendication 9, dans laquelle un dispositif de réglage (110) est prévu, avec lequel une distance variable peut être réglée entre la surface de transfert de chaleur (104) et une surface de pose (112).

11. Source de chaleur portative selon la revendication 9 ou 10, dans laquelle l'ouverture (114) accueille des adaptateurs interchangeables (118) à l'état d'utilisation conforme à son usage prévu, en particulier dans laquelle des adaptateurs différents (118) présentent des hauteurs différentes et/ou des distances différentes au noyau chauffant (10) et/ou des conductivités thermiques différentes et/ou des diamètres différents.

12. Source de chaleur portative selon l'une quelconque des revendications précédentes, dans laquelle pour un mode de réalisation comme chauffe-plat (200) le noyau chauffant (10) est disposé dans un espace creux (202) de l'isolation thermique (70), dans laquelle l'isolation thermique (70) est conçue de manière à pouvoir être divisée.

13. Source de chaleur portative selon les revendications 9 à 12, dans laquelle la plaque de cuisson (100) ou le chauffe-plat (200) présente un ou plusieurs agencements de poignées (106, 206).

14. Source de chaleur portative selon les revendications 9 à 13, dans laquelle le noyau chauffant (10) est conçu comme un disque sensiblement plat, dont le diamètre est supérieur à sa hauteur.

15. Source de chaleur portative selon l'une quelconque des revendications 1 à 8, dans laquelle pour un mode de réalisation comme four (300) le boîtier (40) est disposé dans un chariot de transport (308) mobile.

16. Source de chaleur portative selon la revendication 15, dans laquelle l'isolation thermique (70) présente un espace creux (302), dans lequel est disposé le noyau chauffant (10) et la première isolation thermique (70) est entourée par une seconde isolation thermique (304).

17. Source de chaleur portative selon la revendication 15 ou 16, dans laquelle un évidement (310) est disposé comme zone de retenue thermique dans la première et/ou la seconde isolation thermique (70, 304), en particulier dans laquelle l'évidement (310) est prévu pour accueillir un ballon d'eau chaude (311).

18. Source de chaleur portative selon l'une quelconque des revendications 15 à 17, dans laquelle le noyau chauffant (10) est conçu comme un cylindre, dont le diamètre est inférieur à sa hauteur.
